# EUROPEAN PATENT APPLICATION

(11) **EP 2 557 041 A1**
(43) Date of publication of application: **13.02.2013**
(21) Application number: 11177292.7
(22) Date of filing: 11.08.2011
(51) Int. Cl.: B65B 7/16, B65B 51/14, B65B 61/06

(54) **Method for producing a sealed packaging container using a reel of cut-out sheet material**

(71) Applicant: Neven-Lemmens Plastics NV, 3830 Wellen (BE)
(72) Inventor: Vanmechelen, Laurent, 3690 Zutendaal (BE)
(74) Representative: Caers, Raphael Frans Ivo

(57) **Abstract**

Method for sealing a packaging container (1) comprising a bottom (2) and a lid (3), each comprising corresponding peripheral flanges (4, 5) having sealing surfaces (6, 7) located below the top of the lid (3), the method comprising the steps of: a) providing a first reel (15) of flexible sheet material (20) having a plurality of cut-out zones (21) corresponding to the container lid (3), surrounded by sealing zones (22) to be sealed to said sealing surfaces (6,7), the sealing zones (22) being surrounded by a remainder zone (23) to allow rewinding of the sheet material (20) on a second reel (16) after removal of the sealing zones (22); b) unwinding the sheet material (20) from the first reel (15) and onto the second reel (16); c) sealing the sealing zone (22) to the sealing surfaces (6, 7); d) cutting the sheet material (20) at an outer perimeter of the sealing zone (22).

## Description

### FIELD OF THE INVENTION

The invention relates to a method for producing a sealed packaging container, in particular a container for the food market having a bottom and a lid, each comprising corresponding peripheral flanges shaped such that the corresponding flanges provide, in closed position of the container, peripheral rims having sealing surfaces located substantially below the top of the lid.

### BACKGROUND OF THE INVENTION

A wide variety of sealable packaging containers for packaging food products are available in the market, as well as methods for sealing them.

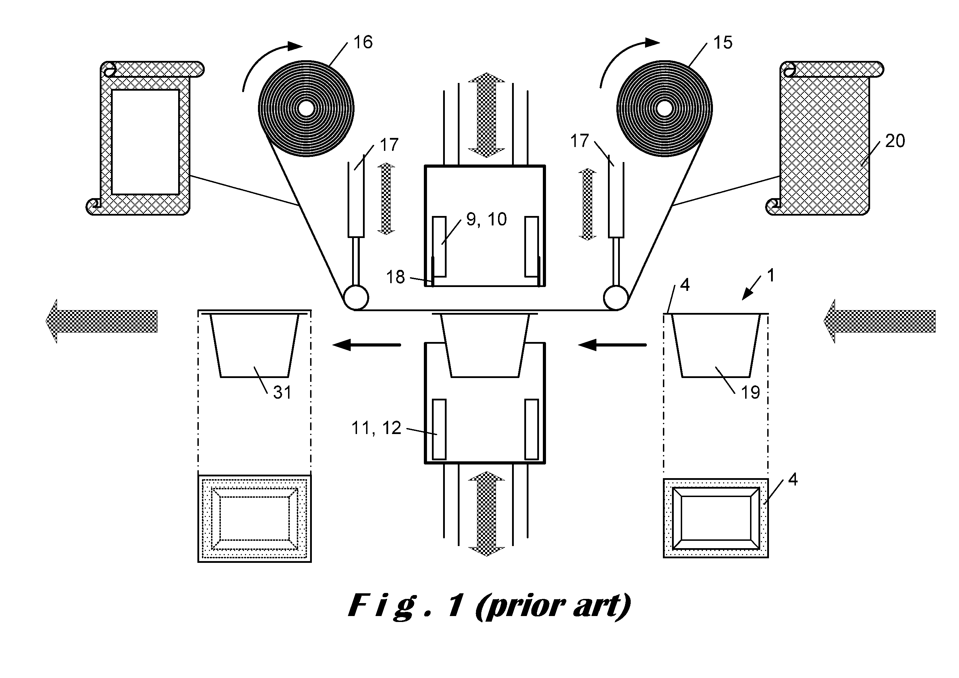

An example is a package made of a plastic material, and having a bottom surface and upside walls, the walls having a peripheral flange substantially parallel to the bottom and located at the top of the package. This package may be closed by sealing a foil to the peripheral flanges at the top of the upright walls. A method for sealing such a package is shown in Fig 1, whereby a foil material is unwound from a first reel, sealed to the flange, cut out, and wound on a second reel. This method does not work for packaging containers having a container lid that extends above the plane of the sealing surfaces.

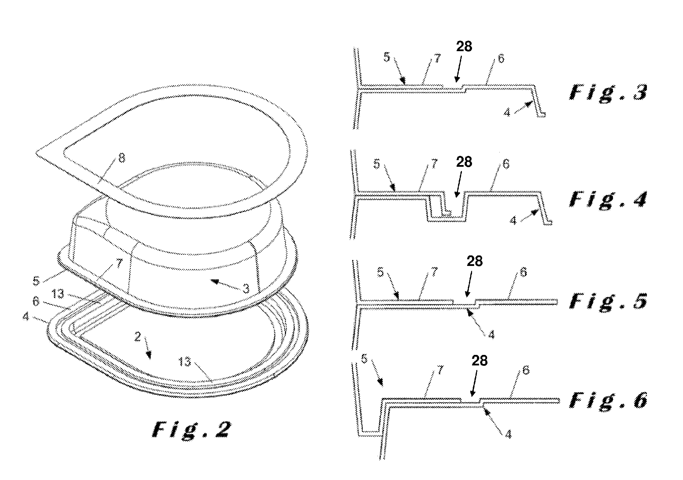

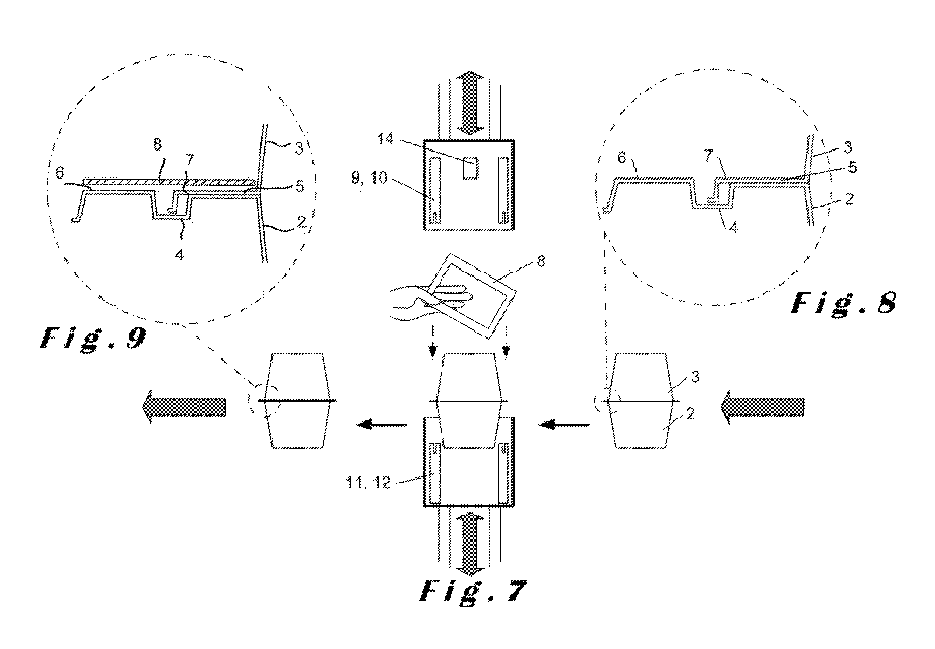

EP1581437 describes a food packaging container as illustrated in Figures 2-6. It describes a packaging container comprising two container halves (a bottom part and a lid part), which may be sealed by a method illustrated in Figures 7-9, wherein a peripheral sheet-like sealing member is placed over the adjacent peripheral rim surfaces of corresponding peripheral flanges of the container halves, and by welding the sealing member to the flanges. A disadvantage of this method is that its sealing method requires manual placement of the sheet like sealing member, which is relatively slow and expensive.

### DISCLOSURE OF THE INVENTION

It is an aim of the present invention to provide an improved method for sealing a packaging container comprising a bottom and a lid, each comprising corresponding peripheral flanges shaped such that the corresponding flanges provide, in closed position of the container, peripheral rims having sealing surfaces located substantially below the top of the lid, one of the sealing surfaces of the bottom or lid completely surrounding the other sealing surface and as an extension of the shape of the other.

This aim is achieved by a method having the technical features of the first claim. Thereto, the method according to the present invention comprises the following steps:
a) providing a first reel of a flexible sheet material comprising at least one first layer having a support function and at least one second layer having a sealing function, the sheet material having a plurality of cut-out zones suitable for letting pass the container lid without its sealing surface or the container bottom without its sealing surface, the cut-out zones being spaced apart from each other in longitudinal direction of the sheet material, each cut-out zone being surrounded by a sealing zone suitable for overlapping an area covering the sealing surfaces of the bottom and of the lid and the area between the sealing surfaces, the sealing zone being adapted to be removed from the sheet material and to be sealed to said sealing surfaces, the sealing zones being surrounded by a remainder zone to allow rewinding of the sheet material on a second reel after removal of the sealing zone;
b) unwinding the sheet material from the first reel and onto the second reel while keeping the sheet material under tension for positioning the sealing zone of the sheet material over the sealing surfaces;
c) sealing the sealing zone to the sealing surfaces thereby sealing the lid to the bottom;
d) cutting the sheet material at an outer perimeter of the sealing zone for separating the sealing zone from the remainder zone.

The inventor has found that by providing a flexible sheet material having a plurality of cut-out zones, surrounded by sealing zones which are surrounded by a remainder zone, the sheet material may be supplied as a longitudinal sheet material wound on a first reel, which may be rewound on a second reel after sealing and after cutting the sealing zone from the remainder of the flexible sheet material. This allows automated placement of the sealing zones instead of having to manually apply individual sheet-like sealing members over the container lid. The inventor surprisingly found that a reliable sealing method can be obtained in this way, contrary to the common belief that a sheet material wound on a reel has to be imperforated, or at most have a very low degree of perforation (such as e.g. small perforations of 5 mm diameter located on a 5 cm grid).

The inventor was very surprised to see that a flexible sheet material having relatively large cut-out zones (e.g. 20% or even 30% of the sheet material being removed), can reliably be wound on a reel. When wound, it looks like two disks (formed by the lateral edges of the flexible sheet material) spaced apart on the reel and being interconnected by a plurality of transversal strips, the latter being formed by the part of the remainder zone that is located between the sealing zones. The inventor has found that such a reel is sufficiently rigid to be stored, transported and mounted on a sealing machine, and that the cut-out sheet material is sufficiently rigid to be unwound, sealed, and cut-out further (e.g. even up to 50% of the material being removed), and the remainder being sufficiently rigid for being rewound on a second reel.

By keeping the sheet material under tension between the first and the second reel, curling of the sheet material is avoided, and the container can reliably be sealed. It also allows the thickness of the sheet material being reduced, as the sealing zone need not have structural strength in a stand-alone way, as opposed to the sheet like sealing member used in the prior art.

Another benefit of the method of the present invention is that existing machinery may now also be used for automatically sealing packaging containers having a top lid extending above the peripheral surfaces to be sealed, while such machinery, as far as the inventor is aware, was never used in this way. This is only possible by making use of a reel of cut-out sheet material as described above. As the cost for sealing the container constitutes an important part of the price of the packaged product, reducing the price for sealing is a very important commercial aspect when selecting a packaging container.

Preferably the area of the cut-out zones of the flexible sheet material is at least 20% of the area of the sheet material before removing the cut-out zones, preferably at least 25%, more preferably at least 30%, even more preferably at least 35%. The inventor has found that such as large portion of the sheet material may be cut-out while still being suitable for use in the above described method. This reduces the weight of the reels, which facilitates the handling of the reels, may increase the production rate and machine efficiency (i.e. less down-time).

Preferably the cut-out zones are spaced apart in longitudinal direction of the flexible sheet material by a predefined distance, whereby the ratio of that distance relative to the length of the cut-out zones in longitudinal direction of the sheet material is 10%-60%, preferably 20%-50%, more preferably 30%-50%. This ratio should be as small as possible in order to minimize the amount of material, but should be large enough for easy cutting and rewinding on the second reel. The optimal ratio may be machine type dependent.

Preferably the minimum width of the remainder zone measured in transverse direction of the sheet material on each side of the sealing zone is 1.0 - 6.0 cm, preferably 1.0 - 5.0 cm, more preferably 1.0 - 4.0 cm. The inventor has surprisingly found that a sheet material with such a small width can reliably be used in the method of the present invention. This width should be as small as possible in order to minimize the amount of material, but should be large enough for providing a first and second reel having sufficient stability.

Preferably the sheet material is paperless. While paper or cardboard was essential for sufficient stability of the sheet-like sealing member used in the prior art, the sheet material used in the method of the present invention may not require paper or cardboard, because curling during sealing is prevented in another way, by keeping the sheet material under tension between the first and second reel, even though the sheet material is largely cut-out.

In an embodiment the sheet material comprises a thermally active sealing layer at the location of the sealing zones, and the step of sealing comprises local heating of the sheet material. This allows for a fast production rate. This is even more beneficial in combination with a paperless sheet material, which may have a lower thermal resistance, so that the heating time may be reduced, and the production rate further increased.

In an embodiment of the method according to the present invention, the sheet material comprises a sealing layer with a pressure sensitive adhesive at the location of the sealing zones, and the step of sealing comprises applying pressure to the sealing zone. An advantage of pressure sealing as compared to heat sealing is that the food inside the packaging container would be less exposed to heat, allowing the freshness date of the food to be extended.

In an embodiment of the method according to the present invention, the sheet material comprises a UV curable resin at the location of the sealing zones, and the step of sealing comprises applying UV light to the sealing zone. UV curing could be several orders of magnitude faster than heat curing, thereby further increasing the production rate. Another advantage as compared to heat sealing is that the food inside the packaging container would be less exposed to heat, allowing the freshness date of the food to be extended.

Optionally, the remainder zone comprises a low-tack re-adherable adhesive for increasing the stability of the flexible sheet material wound on the first and second reel. By applying a low-tack re-adherable adhesive to the remainder zone, in particular to the lateral edges of the flexible sheet material, a reel with a substantially higher stability may be obtained, while the tension for unwinding the material from the first reel need not be substantially increased. By using such an adhesive the thickness of the sheet material may be further reduced, while maintaining or even increasing the reel stability. This is especially true for the second reel having even larger cut-out areas.

It is also an aim of the present invention to provide a reel of sheet material having the technical characteristics described above.

It is also an aim of the present invention to provide a kit of parts comprising a plurality of packaging containers and a corresponding reel of sheet material as described above.

### BRIEF DESCRIPTION OF THE DRAWINGS

The present invention will be described with respect to particular embodiments and with reference to certain drawings, but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention. The drawings are intended to describe the principles of the invention. Embodiments of the invention can use combinations of the different features and elements of different drawings.
Fig 1 shows a prior art method for producing top-sealed packaging containers having a bottom surface and upright walls with a peripheral flange located at the top of the package.
Fig 2 shows a prior art packaging container having a bottom and lid part, in exploded view, which may be sealed by the method of the present invention.
Figures 3-6 show several geometries of peripheral rims for the packaging container of Fig 2 in cross section, which may be sealed by the method of the present invention.
Fig 7 shows a prior art method for producing the container of Fig 2 using part of the equipment of Fig 1 and using the sheet-like sealing member as described in EP1581437.
Fig 8 is a detailed view of the peripheral rims of the packaging container used in Fig 7 before being sealed.
Fig 9 is a detailed view of the peripheral rims of the packaging container used in Fig 7 after being sealed.
Fig 10 shows an example of sealing members which may be used in the method of the present invention.
Fig 11 is a schematic view of the sealing method of the present invention, using a reel of sheet material having cut-out zones and sealing zones and a remainder zone.
Fig 12 is a top view of the sheet material which may be used in the method according to the present invention.
Fig 13 is an example of the sheet of Fig 12 with a pre-printed sealing zone, which may be used in the method of the present invention.

### DETAILED DESCRIPTION OF PREFERRED EMBODIMENTS

### REFERENCES

- 1: packaging container
- 2: bottom part of the packaging container
- 3: top part of the packaging container, container lid
- 4: flange of the bottom part
- 5: flange of the top part
- 6: peripheral rim of bottom part
- 7: peripheral rim of top part
- 8: sheet like sealing member
- 9, 10: peripheral welding elements
- 11, 12: peripheral supporting members
- 13: additional peripheral rim
- 14: suction cup
- 15: first reel
- 16: second reel
- 17: moving arms
- 18: knife
- 19: upright wall
- 20: sheet material
- 21: cut-out zone
- 22: sealing zone
- 23: remainder zone
- 26: lip
- 27: lateral edges of remainder zone
- 28: area between sealing surfaces of top and bottom
- 31: sealed packaging container

The present invention will be described with respect to particular embodiments and with reference to certain drawings but the invention is not limited thereto.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

A wide variety of sealable packaging containers for packaging food products are available in the market, as well as methods for sealing them.

Fig 1 shows a prior art sealing device and schematically illustrates a method for producing top-sealed packaging containers having a bottom surface 2 and upright walls with a peripheral flange 4 located at the top of the package 1. An unsealed package 1 e.g. containing food products enters Fig 1 from the right of the figure, e.g. on a conveyer belt. The packaging container is shown from side view (in the middle of the figure) and from a top view (near the right bottom of the figure). The packaging container 1 enters the sealing device, and peripheral supporting members 11, 12 thereof are moved toward the peripheral flange 4 of the container 1 for supporting it. The sealing device further comprises a first reel 15 with a sheet material 20, such as e.g. a plastic transparent foil wound on a first cylinder for sealing the container 1, part of which sheet material 20 is then placed on top of the container 1 (in the centre of Fig 1) by means of two arms 17 which may be displaced in vertical direction for placing the foil on top of the peripheral edge 4 of the container 1. Then peripheral welding elements 9, 10 of the sealing device are moved toward the supporting members 11, 12 for heating part of the sheet material 20 and welding it to the peripheral flange 4 thereby sealing the container 1. Then the sheet material 20 is cut, e.g. on the outside of the peripheral flanges 4 (known as an "out-side cut"). The cutting of the sealing foil, as part of the sheet material, may occur by means of knifes 18 located on the welding elements 9, 10, or by separate cutting means (not shown). Finally the arms 17, the supporting members 11, 12, and the welding members 9, 10 are removed from the container 1, and the sealed packaging container 31 leaves the sealing device on the left of Fig 1.

Fig 2 shows an exploded view of a packaging container 1 as may be used in the method of the present invention. The container 1 has a container bottom 2 and a container lid 3, each comprising corresponding peripheral flanges 4, 5 shaped such that the corresponding flanges provide, in closed position of the container with the lid on the bottom or vice versa, peripheral rims having sealing surfaces 6, 7 located substantially in the same plane below the top of the lid 3, the sealing surface 6 of the bottom completely surrounding the sealing surface 7 of the top, or vice versa. Although preferable, it is however not absolutely necessary that the sealing surfaces lie in the same plane, but it is sufficient that one sealing surface is an extension of the shape of the other, such as e.g. when they are lying on a surface which is not completely flat but slightly curved or bent. It is immediately clear that this packaging container cannot be sealed by the method of Fig 1, because the sealing surfaces 6, 7 are not located at the top of the container lid 3. Figures 3-6 show several geometries of the peripheral rims 4, 5 for the packaging container 1 of Fig 2, but other geometries may also be chosen.

EP1581437 discloses a sheet like sealing member 8 for sealing the packaging container 1 of Figure 2, the sheet like sealing member 8 having the form of a flat ring, which needs to be sufficiently stiff to allow it to be sealed to the flanges, a.o. in order to prevent it from curling before it is clamped between the supporting members 11, 12 and the welding elements 9, 10. For that reason the sealing member 8 comprises paper or cardboard. Fig 7 illustrates a known method for sealing the container of Fig 2, using part of the device of Fig 1. However, instead of unwinding a sheet material from the first reel 15 and onto the second reel 16, the sheet like sealing member 8 is manually placed over the top of the lid and on the flanges of the container 1. Optionally the upper part of the sealing device may comprise a suction cup 14 for temporarily lifting the lid 3 so that a food product can be placed therein. Optionally the device comprises means (not shown) for controlling the atmosphere in the container before sealing it. Figures 8 and 9 show the peripheral rims 4, 5 and the sealing surfaces 6, 7 of the packaging container 1 of Fig 2 in more detail, respectively before and after the sealing step.

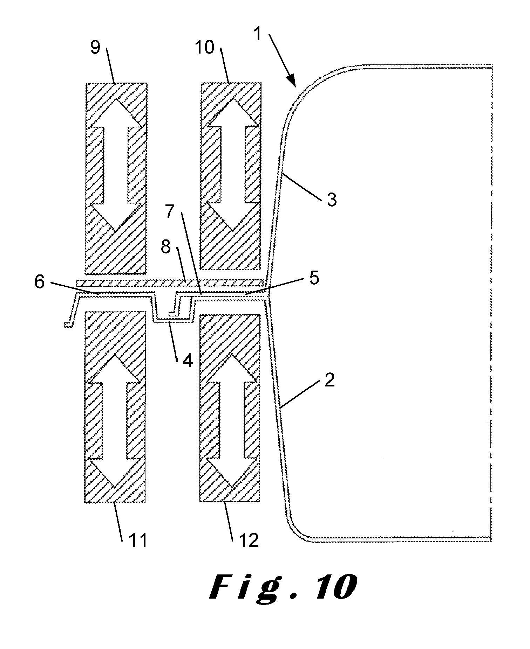

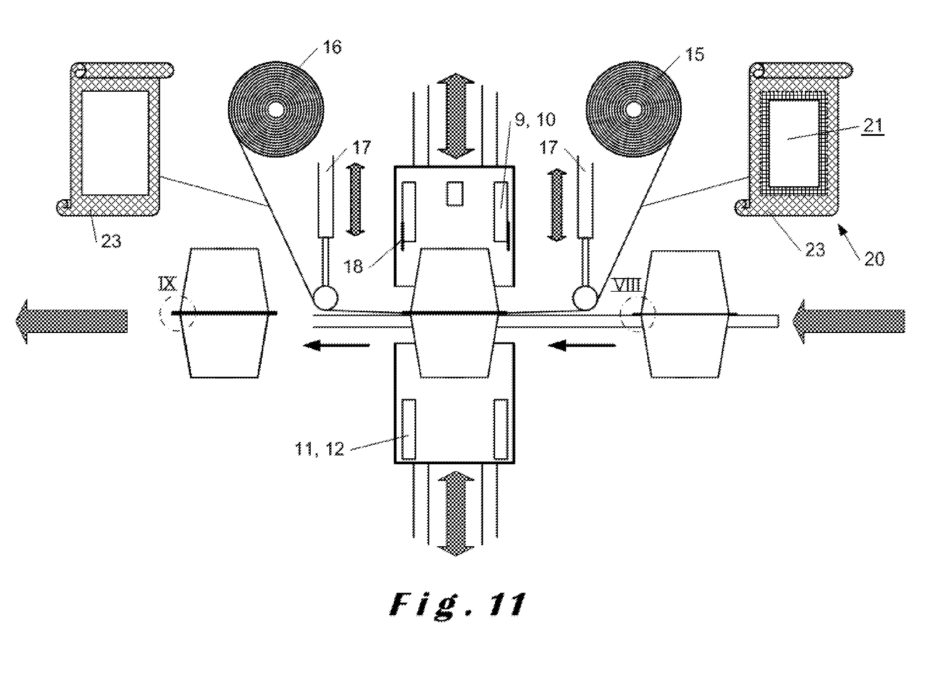

Fig 10 shows in detail an embodiment of the corresponding supporting members 11, 12 and welding elements 9, 10 at the time of sealing the peripheral flanges in Fig 7. However, this figure is also applicable in the method of the present invention, as illustrated in Fig 11.

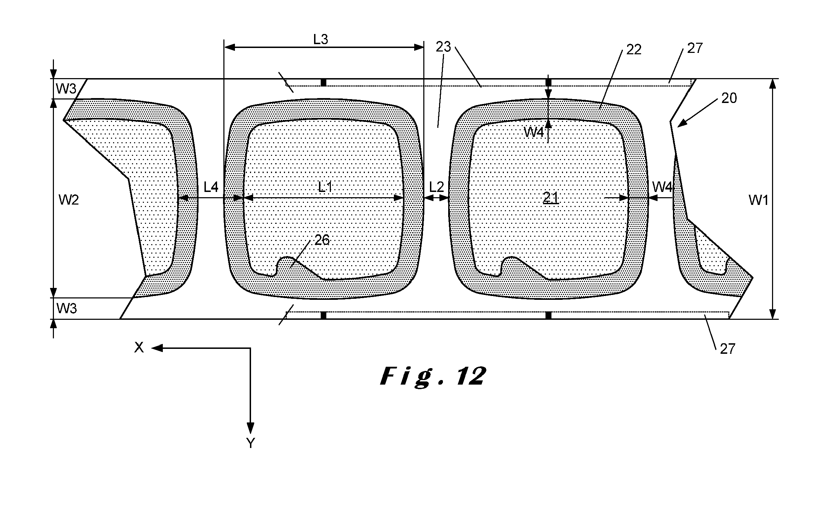

Fig 11 is a schematic view of the method according to the present invention, using substantially the same sealing device as shown in Fig 1, but for sealing a packaging container 1 comprising a bottom 2 and a lid 3 each comprising corresponding peripheral flanges shaped such that the corresponding flanges provide, in closed position of the container, peripheral rims having sealing surfaces 6, 7 located substantially below the top of the lid 3, one of the sealing surfaces 6, 7 of the bottom 2 or lid 3 completely surrounding the other sealing surface 7, 6 of the lid 3 and bottom 2 and as an extension of the shape of the other. The device has a first reel 15, upon which a flexible sheet material 20 is wrapped, but in this case the sheet material 20 has a plurality of cut-out zones 21 with a shape and dimensions corresponding to the container lid 3, such that the container lid 3 can penetrate the opening of the cut-out zone 21, and the sheet material 20 can be brought into contact with the sealing zones 6, 7 of the peripheral flanges 4, 5. As shown in detail in Fig 12, the sheet material 20 to be used in the method of the present invention has a plurality of cut-out zones 21 spaced apart from each other in longitudinal direction X of the sheet material. Each cut-out zone 21 is completely surrounded by a sealing zone 22 having a shape and dimensions suitable for overlapping an area 28 covering the sealing surfaces 6, 7 and the area between the sealing surfaces 6, 7 of the bottom 2 and of the lid 3. The sealing zones 22 are foreseen to be removed from the sheet material 20 and to be sealed to the sealing zones 6, 7 of said peripheral rims 4, 5. The sealing zones 22 of the flexible sheet material 20 are surrounded by a continuous remainder zone 23 to allow rewinding of the sheet material 20 on a second reel 16 after removal of the sealing zone 22.

Referring back to Fig 11, and assuming heat sealing is used, the container 1 could be sealed as follows. Assume that the moving arms 17 are in a lifted position, and that the container 1 has entered the sealing device, e.g. on a conveyer belt. (at the right side of Fig 11) The peripheral supporting members 11, 12 are moved upwards for supporting the peripheral edges 6, 7. Then the first and second reels 15, 16 are rotated over a certain angle for positioning the next sealing zone 22 of the sheet material 20 over the lid 3. During the rotation of the reels 15, 16, the sheet material 20 is kept under tension to prevent curling. Then the arms 17 are moved to a lower position for positioning the sealing zone 22 of the sheet material 20 on top of the sealing surfaces 6, 7 of the bottom 2 and the lid 3. Then the welding elements 9, 10 are moved downwards for sealing the sealing zone 22 to the peripheral edges 6, 7. The sealing zone 22 is separated from the remainder of the sheet material 20, e.g. by cutting using knifes 18 present on the welding elements 9, 10, e.g. using an "outside-cut", but an inside-cut could also be used. Note that the knifes 18 need not necessarily be present on the welding elements 9, 10, they may also be driven separately. After the welding took place, the welding elements 9, 10 are moved upwards, and the arms 17 are moved upwards at least to a position higher than the lid 3 of the container 1, the supporting members 11, 12 are moved downwards, and the conveyer belt is moved for positioning the next container 1 to be sealed.

Fig 12 shows in detail a top view of a preferred embodiment of the sheet material 20 which may be used in the method of the present invention. The sheet material 20 comprises a plurality of cut-out zones 21 having a shape and dimension corresponding to the container lid 3 of the container 1 to be sealed. For practical reasons these cut-out zones 21 are removed from the sheet material 20 beforehand, so that they need not to be removed on the sealing machine, allowing existing machinery to be used without modifications, for reducing the weight of the reels (as described higher), and for avoiding extra handling of removing the material. The cut-out zones 21 are spaced apart from each other in longitudinal direction X of the sheet material 20, for example in Fig 12 by a distance equal to w4+L2+w4. Each cut-out zone 21 is surrounded by a sealing zone 22 having a shape, for example a ring shape and dimensions, for example a substantially constant width w4 corresponding to the sealing surfaces 6, 7 of the container 1 to be sealed. At least in the sealing zone 22 the sheet material 20 should have a second material layer having a sealing function, e.g. a thermally active sealing layer, or a pressure sensitive sealing layer, or a UV sensitive sealing layer. The remainder of the sheet material 20 surrounding the sealing zones 22 is called in this document "the remainder zone" 23, and it has sufficient strength and rigidity to allow rewinding thereof on the second reel 16. Thereto the sheet material 20 comprises - at least in the remainder zone 23 - a first material layer having a support function. Typical examples are a OPP (oriented polypropylene) layer or a PET (polyester) layer or a OPET (oriented polyester). In an example whereby the bottom and the lid are made out of PET, and the sealable surface layers are amorphous polyester, the thermally active sealing layer may comprise ethylene (meth)acrylic acid copolymer (EMAA). The sealing zone 22 in the example in Fig 12 also has an optional lip 26 for easy removal thereof by the end-customer.

In a specific example, the sheet material 20 has a width W1 of approximately 29.0 cm, and the cut-out zones 21 are substantially square with an area of approximately L1 x L1 = 17 cm x 17 cm, and the width w4 of the sealing zone 22 is approximately 2.0 cm, and the minimal width w3 of the remainder zone 23 measured in transverse direction Y of the sheet material 20 on each side of the cut-out zone 22 is approximately 4.0 cm, and the minimum distance L2 between two successive sealing zones 22 is approximately 3.0 cm, and the minimum distance L4 between two successive cut-out zones 21 is approximately 7.0 cm, and the distance between the centres of the cut-out zones 23 is approximately 24.0 cm, and the ratio of the area of the cut-out zones 21 relative to the total area of the sheet material 20 is approximately 17x17/29x24 or approximately 41%. But other shapes and dimensions of the container lid 3, and the corresponding sheet material 20 are also possible. It is surprising to see that a reel 15 with a flexible sheet material 20 having such large cut-out zones 21, which - after removal of the sealing zones 22 even become openings of approximately L3 x L3 = 19 cm x 19 cm, which is approximately 52% of the full sheet material, may actually be used in the method of the present invention in a reliable manner, i.e. may be properly sealed, properly rewound on the second reel 16, without breaking, without curling, etc.

Preferably the sheet material 20 is paperless. In contrast to the sheet like sealing member 8 described in EP1581437, which needs to have sufficient stiffness in order to prevent curling during storage and/or during the sealing process, which stiffness may be provided by a sheet material comprising paper or cardboard, the sheet material used in the method of the present invention may not require paper or cardboard, because curling is prevented in another way, by keeping the sheet material under tension between the first and second reel 15, 16. This allows a large range of other sheet materials to be used, making the method more versatile. Avoiding the use of paper in the sealing material also solves some prior art problems with regards to moisture. Avoiding paper also increases thermal heat flow when sealing, so that the time required for thermal sealing is reduced, and the food in the container is less exposed to heat.

Optionally the remainder zone 23 comprises a low-tack re-adherable adhesive for increasing the stability when wound on the first and second reel 15, 16. When used, this adhesive is preferably applied on the lateral edges 27 of the flexible sheet material 20, e.g. as a continuous strip extending over the entire length of the sheet material, or intermittently. By using such an adhesive, the structural strength of the reel 15, 16 with the cut-out sheet material 20 may be improved, which allows the ratio of the area of the remainder zone 23 relative to the total area to be further decreased, e.g. by increasing the area of the cut-out zone 21 and/or decreasing the minimum width w3 of the remainder area and/or decreasing the distance L2 between the sealing zones 22 and/or by increasing the width w4 of the sealing zone 22. A low-tack re-adherable adhesive allows the sheet material 20 to be easily unwound from the first reel 15 by applying a small force (e.g. order of magnitude of 5 - 25 Newton), and to be rewound on the second reel 16 without adding additional new adhesive, which omission is highly desirable when packaging food products. It also prevents the first and second reels 15, 16 from self-unwinding during storage or transport, and it allows the thickness of the sheet material 20 to be further reduced without compromising the method for applying it. The re-adherable adhesive may e.g. comprise an acrylate-copolymer, which is the famous adhesive used for the well known Post-It Notes® from the company 3M®, or an olefin (meth)acrylate copolymer. This adhesive requires only a very small force, e.g. in the order of magnitude of 1 Newton, for removing a strip having a width of approximately 1 cm, by peeling it off of a surface it is removably attached to.

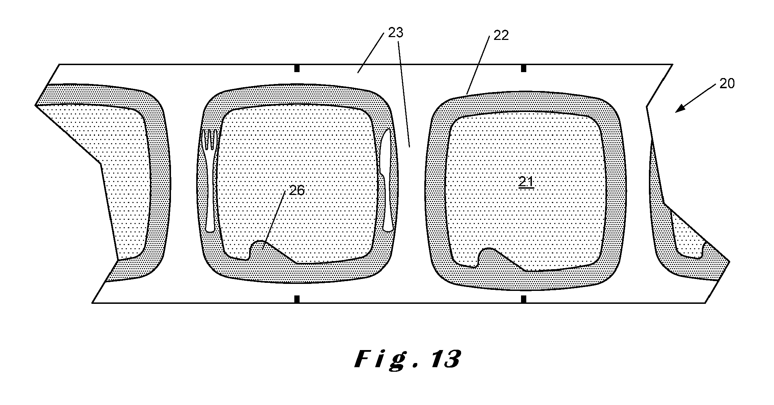

Fig 13 shows an example of the sheet material 20 wherein the sealing zones 22 are pre-printed, in this case with an image of a knife and fork, but other text or images may of course also be printed. In this case the sheet material 20 preferably comprises a printable outer layer, which may be same as the first or the second layer. Such a pre-printed outer layer may provide a decorative effect to the packaging container 1. Also other information about the food product, such as storage conditions or ingredients, may be printed thereon, so that additional labels with such information may be omitted, further simplifying the production process of the packaging container 1.

Although the present invention is described on the basis of specific preferred embodiments, it will be clear that various modifications can be made to these embodiments without deviating from the scope of protection of the invention as set forth in the claims. Consequently the description and drawings should be considered in an illustrative sense rather than a limiting sense.

## Claims

1. Method for sealing a packaging container (1), the packaging container comprising a bottom (2) and a lid (3) each comprising corresponding peripheral flanges (4, 5) shaped such that the corresponding flanges provide, in closed position of the container, peripheral rims having sealing surfaces (6, 7) located substantially below the top of the lid (3), one of the sealing surfaces (6, 7) of the bottom or lid completely surrounding the other sealing surface (7, 6) of the lid and bottom and as an extension of the shape of the other, **characterised in that** the method comprises the steps of:
a) providing a first reel (15) of a flexible sheet material (20) comprising at least one first layer having a support function and at least one second layer having a sealing function, the sheet material (20) having a plurality of cut-out zones (21) suitable for letting pass the container lid (3) without its sealing surface (7) or the container bottom (2) without its sealing surface (6), the cut-out zones (21) being spaced apart from each other in longitudinal direction of the sheet material (20), each cut-out zone (21) being surrounded by a sealing zone (22) suitable for overlapping an area (28) covering the sealing surfaces (6, 7) of the bottom (2) and of the lid (3) and the area between the sealing surfaces (6, 7), the sealing zone (22) being adapted to be removed from the sheet material (20) and to be sealed to said sealing surfaces (6, 7), the sealing zones (22) being surrounded by a remainder zone (23) to allow rewinding of the sheet material (20) on a second reel (16) after removal of the sealing zone (22);
b) unwinding the sheet material (20) from the first reel (15) and onto the second reel (16) while keeping the sheet material (20) under tension for positioning the sealing zone (22) of the sheet material over the sealing surfaces (6, 7);
c) sealing the sealing zone (22) to the sealing surfaces (6, 7) thereby sealing the lid (3) to the bottom (2);
d) cutting the sheet material (20) at an outer perimeter of the sealing zone (22) for separating the sealing zone (22) from the remainder zone (23).

2. The method according to claim 1, wherein the area of the cut-out zones (20) is at least 20% of the total area of the sheet material (20), preferably at least 25%, more preferably at least 30%, even more preferably at least 35%.

3. The method according to claim 1 or 2, wherein the cut-out zones (21) are spaced apart in longitudinal direction of the flexible sheet material (20) by a predefined distance (L4), and whereby the ratio of the distance (L4) relative to the length (L1) of the cut-out zones (21) in longitudinal direction (X) of the sheet material is 30%-60%, preferably 20%-50%, more preferably 30%-50%.

4. The method according to any one of the preceding claims, wherein the minimum width (w3) of the remainder zone (23) measured in transverse direction of the sheet material (20) on each side of the sealing zone (22) is 1.0 - 6.0 cm, preferably 1.0 - 5.0 cm, more preferably 1.0 - 4.0 cm.

5. The method according to claim 1, wherein the sheet material (20) is paperless.

6. The method according to any one of the preceding claims, wherein the sheet material (20) at the location of the sealing zones (22) comprises a thermally active sealing layer, and wherein the step of sealing comprises local heating of the sealing zone (22).

7. The method according to claim 6, wherein the thermally active sealing layer is a polymer layer selected from the group of pealable polymers.

8. The method according to claim 7, wherein the thermally active sealing layer comprises an ethylene (meth)acrylic acid copolymer.

9. The method according to any one of the claims 1-5, wherein the sheet material (20) at the location of the sealing zones (22) comprises a sealing layer with a pressure sensitive adhesive, and wherein the step of sealing comprises applying pressure to the sealing zone (22).

10. The method according to any one of the claims 1-5, wherein the sheet material (20) at the location of the sealing zones (22) comprises a UV curable resin, and wherein the step of sealing comprises applying UV light to the sealing zone (22).

11. The method according to any one of the preceding claims, wherein the remainder zone (23) comprises a low-tack re-adherable adhesive for increasing the stability of the flexible sheet material (20) wound around the first and second reel (15, 16).

12. The method according to claim 10, wherein the re-adherable adhesive comprises an olefin (meth)acrylate copolymer.

13. The method according to any one of the preceding claims, wherein the sheet material (20) comprises a printable outer layer, and wherein the sealing zones (22) are pre-printed.

14. A reel (15) of a flexible sheet material (20) according to any one of the preceding claims.

15. A kit of parts, comprising:
- a plurality of packaging containers (1) having a bottom (2) and a lid (3), each comprising corresponding peripheral flanges (4, 5) shaped such that the flanges provide, in closed position of the container, peripheral rims (6, 7) having sealing surfaces (6, 7) located substantially below the top of the lid (3), one of the sealing surfaces (6, 7) of the bottom or lid completely surrounding the other sealing surface (7, 6) of the lid and bottom and as an extension of the shape of the other;
- a first reel (15) of a flexible sheet material (20) comprising at least one first layer having a support function and at least one second layer having a sealing function, the sheet material (20) having a plurality of cut-out zones (21) suitable for receiving the lid (3) without its sealing surface (7) or the bottom (2) without its sealing surface (6), the cut-out zones (21) being spaced apart from each other in longitudinal direction of the sheet material (20), each cut-out zone (21) being surrounded by a sealing zone (22) suitable for overlapping an area (28) covering the sealing surfaces (6, 7) of the bottom (2) and of the lid (3) and the area between the sealing surfaces (6, 7), the sealing zone (22) being adapted to be removed from the sheet material (20) and to be sealed to said sealing surfaces (6, 7), the sealing zones (22) being surrounded by a remainder zone (23) to allow rewinding of the sheet material (20) on a second reel (16) after removal of the sealing zone (22).
